Europäisches Patentamt

European Patent Office

Office européen des brevets

(11) Publication number: **0 272 123 B1**

(12) **EUROPEAN PATENT SPECIFICATION**

(45) Date of publication of patent specification: **11.03.92**

(51) Int. Cl.⁵: **F16J 13/08**, F16J 13/00, F16J 13/24, F16J 13/18, E05C 9/00

(21) Application number: **87311131.4**

(22) Date of filing: **17.12.87**

(54) Closure.

(30) Priority: **17.12.86 GB 8630147**

(43) Date of publication of application:
**22.06.88 Bulletin 88/25**

(45) Publication of the grant of the patent:
**11.03.92 Bulletin 92/11**

(84) Designated Contracting States:
**DE GB NL**

(56) References cited:
**EP-A- 0 127 952**
**GB-A- 1 910**
**GB-A- 1 603 814**
**GB-A- 2 134 206**

(73) Proprietor: **BEL FILTERS (a division of BRITISH ENGINES LIMITED)**
**St. Peters**
**Newcastle-upon-Tyne, NE6 1BS(GB)**

(72) Inventor: **Twizell, Norman**
**6 Green Lane**
**Morthpeth Northumberland(GB)**

(74) Representative: **Wilson, Nicholas Martin et al**
**WITHERS & ROGERS 4 Dyer's Buildings Holborn**
**London EC1N 2JT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 272 123 B1

## Description

This invention relates to a closure for sealing against internal pressure within a pipe or vessel and to a pipe or vessel including such a closure.

There are many instances where a closure is required to seal against an internal pressure such that a conventional latching mechanism will not suffice. Yet such a closure needs to provide a quick, safe and easy means of access into the vessel or pipeline when the internal pressure has been vented.

A prior closure for a pressure pipe or vessel is disclosed in GB-A-2134206. That closure has a centre piece rotated by a lever and four locking members each pivoted at one end on a respective eccentric itself pivoted on the closure. The centre piece is connected to the eccentrics by links and serves to drive the eccentrics so as to move the locking members into locking engagement.

GB-A-1910 of 1914 discloses a fastening device for hinged closure apparatus and comprises two toothed rings movable about an opening to be closed. The toothed rings mesh with a number of toothed pinions carrying securing cams and one ring moves the toothed pinions on threaded pivots to tighten or loosen the securing cams and the other toothed ring drives the securing cams angularly into and out of a locking position over the closure.

According to the present invention, a closure for sealing an opening in a pipe or vessel comprises a closure body, a plurality of locking members mounted on the closure body and movable between released and engaged positions, an operating member which may be moved angularly by manipulation by an operator, a drive means angularly movable by operation of the operating member, and a plurality of slave means, one associated with each of the locking members and each including an eccentric drive connection journalled on the respective locking member whereby movement of the operating member causes movement of the drive and slave means such that the drive connections move the locking members to either their released or engaged positions, characterized in that the drive and slave means are drive and slave pinions, the drive pinion meshes with a toothed wheel mounted on the closure body for angular movement, and the toothed wheel meshes with the slave pinions.

Preferably, the closure is circular in plan and there are at least three arcuate locking members, the drive pinion being mounted off-centre of the closure body. In the preferred arrangement, each locking member has two slave pinions except one, which includes a slave pinion and the drive pinion.

The operating member may be an operating handle including a safety pressure release means which has to be released before the handle may be operated thereby providing an audible or visible warning of residual pressure within the pipe or vessel. The closure may also include a safety latch which prevents the closure being swung open by residual pressure in the event that an operator ignores the warning of the safety pressure release means.

The invention also includes a pipe or vessel including a closure as aforesaid.

The invention will now be described by reference to the accompanying drawings in which:

Figure 1 shows a sectional side elevation of the preferred embodiment of closure in the closed or operating position;

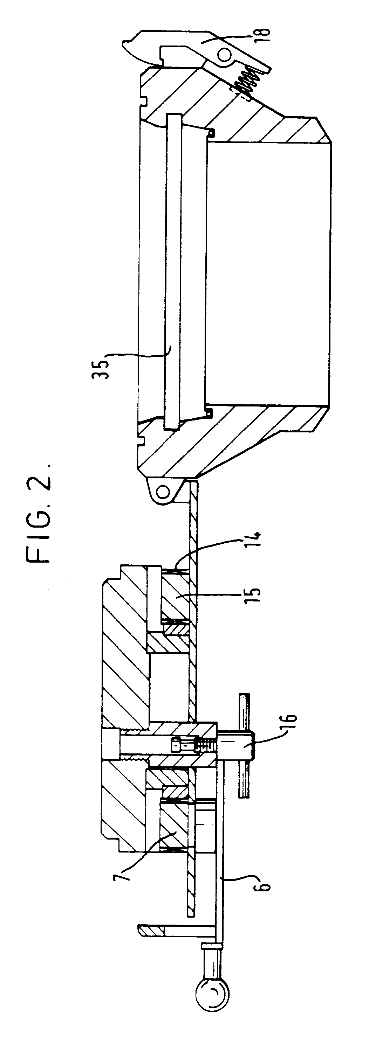

Figure 2 is a side elevation on a smaller scale showing the closure of Figure 1 in open position;

Figures 3 and 4 are diagrammatic front elevations showing the closure of Figure 1 in the locked and unlocked positions respectively;

Figures 5 and 6 are a front elevation of the closure incorporating a first safety means in the engaged and unengaged positions; and

Figures 7 and 8 illustrate a second safety means in the engaged and unengaged positions.

In the drawings a closure 1 is provided and arranged to close an opening in a neck ring 2. The neck ring 2 can be welded to a vessel or pipeline or can be integral with the vessel as in the case of a cast or forged vessel. The closure 1 is attached to the neck ring 2 by way of a hinged weatherproof cover 4 which protects the operating mechanism and allows the closure to be hinged open and closed. Once swung to the closed position, the closure 1 retains internal pressure and is held against pressure seal 3 by means of locking segments 5 which are movable into a grooved recess 35 in the neck ring 2. In the embodiment of this invention illustrated there are three such locking segments 5 which fit into the grooved recess 35 and preferably, in accordance with the invention there are three or more such segments 5.

The locking segments 5 may be moved into engagement with, or released from, the groove 35 by means of an operating handle 6 attached to one end of a drive pinion 7. The drive pinion 7 passes through a bearing in the weatherproof cover 4 and the end of the pinion remote from the handle 6 is formed into an eccentric circular drive pin 8 at one end of one of the locking segments 5. The drive pinion 7 is positioned so that its teeth engage with those of a rotatable toothed wheel 10 which is rotatably mounted on a centrally located bearing 11. Engaged within a hole or bearing at the other end of the locking segment 5 with the drive pinion 7 is a similar eccentric circular drive pin 13 which is part of a slave pinion 14 which is also positioned so that its teeth engage with those of the toothed wheel 10. The slave pinion 14 is rotatably mounted on a stub shaft 15 attached to the weatherproof cover 4. The remaining locking segments 5 are each fitted with one slave pinion 14 at each end which are similarly rotatably mounted and are positioned to mesh with the toothed wheel 10. Thus rotation of the operating handle 6 also rotates the drive pinion 7 which in turn drives the toothed wheel 10 and hence the slave pinions 14. Alternatively the toothed wheel 10 could be a drive wheel with all the pinions, including pinion 7 being slave pinions.

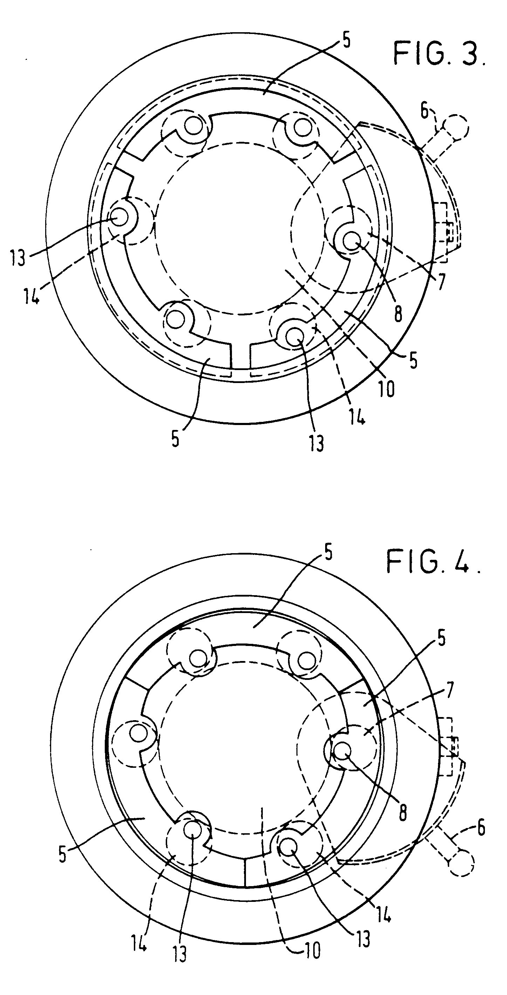

It will be seen from Figures 3 and 4 that angular rotation of the drive pinion 7 and slave pinions 14 moves the centres of the respective eccentric drive pins 8 and 13 towards and away from the centre of the closure. As the drive pins 8 and 13 are journaled on the locking segments 5, the locking segments 5 are driven in and out of engagement with the grooved recess 35 in the neck ring 2. Preferably the radially outer edges of the locking segments 5 are sightly, tapered to facilitate their entry into the recess in the neck ring 2 and also to force the closure 1 against the pressure seal 3 so as to slightly compress it.

It is preferred in the embodiment of closure of the invention to include safety features in the design:

(a) to prevent the operating handle 6 from opening whilst the vessel or pipeline is still pressurised;

(b) to prevent the closure 1 from fully opening if there is residual internal pressure; and

(c) to prevent the vessel or pipeline being repressurised unless the locking segments 5 of the closure 1 are fully engaged.

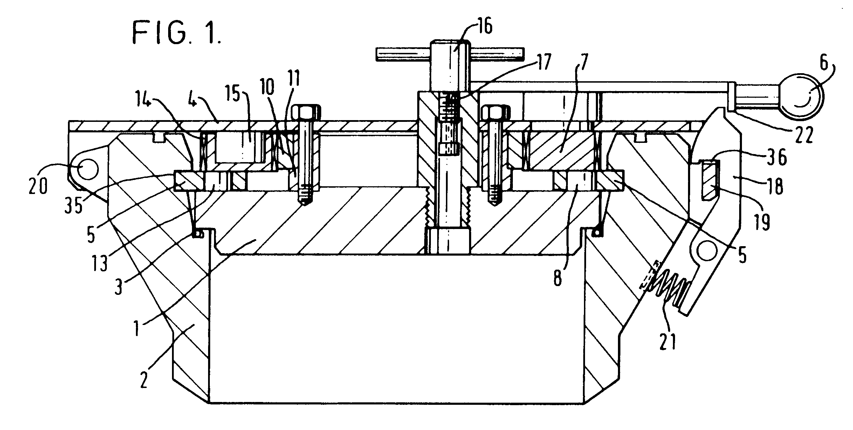

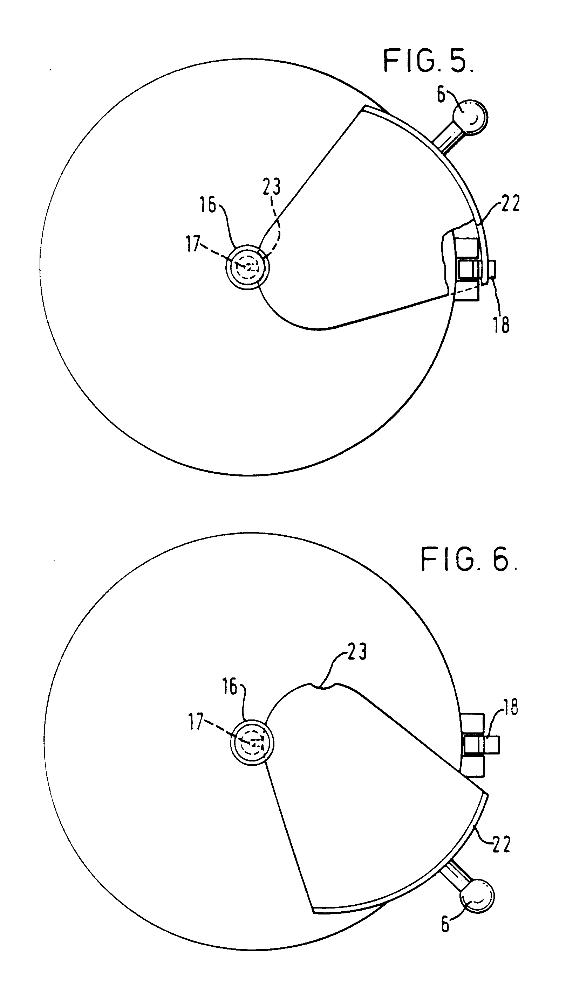

For example, Figure 5 shows the provision of a safety vent plug 16 centrally positioned on the closure which is interlocked with a depression 23 in the edge of the operating handle 6 which is in the form of a wedge-shaped plate. With this arrangement the operating handle 6 can not be moved from the closed position until the safety vent plug 16 is partially unscrewed. Once the plug 16 starts to unscrew, a bleed hole or slot 17 allows any residual gas or liquid to vent to atmosphere thereby giving audible or visible warning that the vessel has not been properly isolated and vented of internal pressure. Where a slot is provided it would suitably comprise a slot up the side of the thread of the vent plug 16. An added feature of this arrangement is that the safety vent plug 16 can only be re-tightened with the operating handle 6 in the closed position to move the depression 23 back adjacent to the plug 16 thereby ensuring that the locking segments 5 are fully engaged. The released position of the operating handle is shown in Figure 6. A similar arrangement is shown in Figure 1 where the safety vent plug 16 is slightly offset from the centre. The positioning of the vent plug is normally determined by the size of closure i.e. for smaller sizes the vent plug is positioned centrally but in larger sizes it is offset to reduce the need for a larger handle.

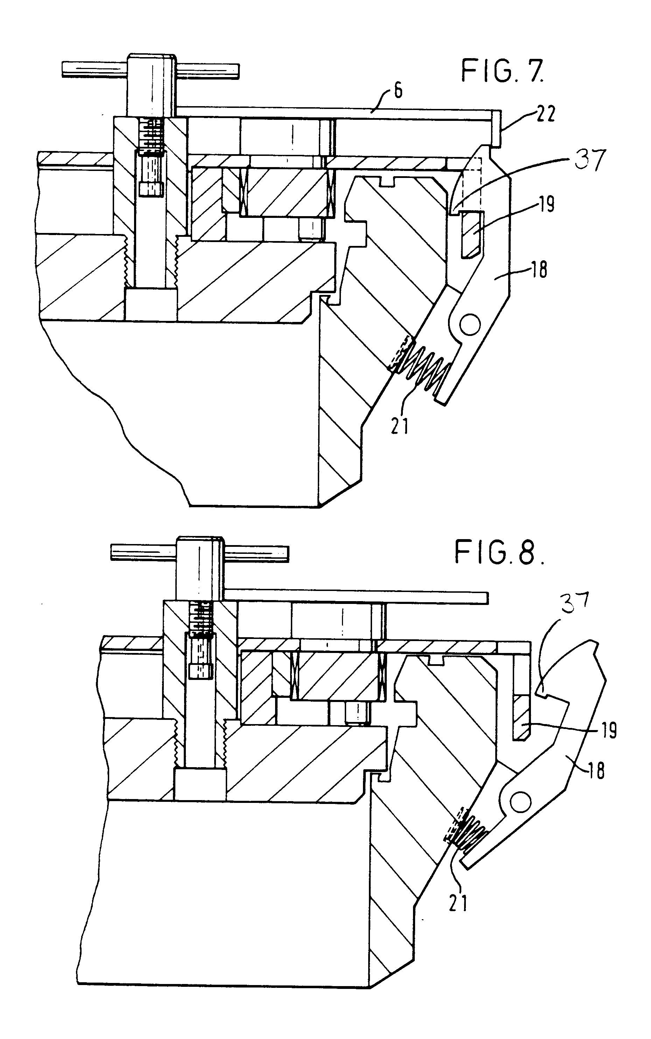

A further safety feature that can be incorporated is a retaining latch 18 as shown in Figures 1, 7 and 8. The retaining latch 18 provides a secondary back-up such that, if an operator ignores the audible or visible warning signal from the safety vent plug 16 it can be possible at low internal residual pressure to force the operating handle 6 to the open position. If this happens the closure 1 moves outwardly to the position shown in Figure 7 to engage the retaining latch 18. This movement is permitted by the provision of a clearance 36 provided between the latch 18 and a bracket 19, attached to the weatherproof cover 4 on the opposite side to the hinge 20, when the closure 1 is fully shut as shown in Figure 1. A lip 37 on the retaining latch 18 then engages the bracket 19 as shown in Figure 7 and prevents the closure 1 from being swung fully open. Once the closure 1 is partially opened and the internal pressure fully vented as shown in Figure 7, it is possible to slightly close the closure 1 and swing back the retaining latch 18 prior to fully opening the door. On re-closing of the closure, the retaining latch 18 automatically re-engages with the bracket 19 by virtue of the loading applied by a spring 21. Once the operating handle 6 is moved to the closed position, a depending rim 22 at its periphery prevents the retaining latch 18 from being swung out of engagement in all but the fully open position (see particularly Figures 1, 5 and 6).

## Claims

1. A closure for sealing an opening in a pipe or vessel (2) comprising a closure body (1), a plurality of locking members (5) mounted on the closure body (1) and movable between released and engaged positions, an operating member (6) which may be moved angularly by manipulation by an operator, a drive means (7) angularly movable by operation of the operating member (6), and a plurality of slave means (14), one associated with each of the locking members (5) and each including an eccentric drive connection (8) journalled on the respective locking member (5) whereby movement of the operating member (6) causes movement of the drive and slave means (7,14) such that the drive connections (8) move the locking members (5) to either their released or engaged positions, characterized in that the drive and slave means (7,14) are drive and slave pinions, the drive pinion (7) meshes with a toothed wheel (10) mounted on the closure body (1) for angular movement, and the toothed wheel (10) meshes with the slave pinions (14).

2. A closure according to claim 1, wherein the closure body (1) is circular in plan and there are at least three arcuate locking members (5), the drive pinion (7) being mounted off centre of the closure body (1).

3. A closure according to claim 1 or 2, wherein each locking member (5) has two slave pinions (14) except one, which includes a slave pinion (14) and the drive pinion (7).

4. A closure according to any of the preceding claims, wherein the operating member (6) is an operating handle which may be manipulated by an operator and includes a safety pressure release means (16) which has to be released before the handle may be operated thereby, in use, providing an audible or visible warning of residual pressure within the pipe or vessel.

5. A closure according to any of the preceding claims including a safety latch (18) which limits the opening movement of the closure to prevent the closure being fully swung open by residual pressure.

6. A pipe or vessel including a closure according to any one of the preceding claims.

**Revendications**

1. Obturateur pour fermer hermétiquement une ouverture dans une canalisation ou un réservoir (2), comprenant un corps d'obturateur (1), une pluralité d'éléments de verrouillage (5) montés mobiles sur le corps de l'obturateur (1) entre une position libre et une position en prise, un élément de manoeuvre (6) déplaçable angulairement par la manoeuvre d'un opérateur, un moyen d'entraînement (7) déplaçable angulairement par l'action sur l'élément de manoeuvre (6), et une pluralité de moyens subordonnés (14), chacun associé à chaque élément de verrouillage (5), et chacun comprenant un accouplement d'entraînement (8) excentré porté à rotation sur son élément de verrouillage (5), de façon que le mouvement de l'élément de manoeuvre (6) entraîne le mouvement des moyens de transmission et subordonnés (7, 14), de telle sorte que les accouplements d'entraînement (8) déplacent les éléments de verrouillage (5) jusqu'à leur position, soit libre, soit en prise, caractérisé en ce que les moyens d'entraînement et subordonnés (7, 14) sont des pignons d'entraînement et subordonnés, en ce que le pignon d'entraînement (7) est en prise avec une roue dentée (10) montée à rotation sur le corps d'obturateur (1) pour un déplacement angulaire, et en ce que la roue dentée est en prise avec les pignons subordonnés (14).

2. Obturateur selon la revendication 1, caractérisé en ce que le corps d'obturateur (1) est circulaire dans un plan, et en ce qu'il existe au moins trois éléments de verrouillage (5) en forme d'arc, le pignon d'entraînement (7) étant monté décalé par rapport au centre du corps d'obturateur (1).

3. Obturateur selon l'une quelconque des revendications 1 ou 2, caractérisé en ce que chaque élément de verrouillage (5) possède deux pignons subordonnés (14), sauf un qui comprend un pignon subordonné (14) et le pignon d'entraînement (7).

4. Obturateur selon l'une quelconque des revendications précédentes, caractérisé en ce que l'élément de manoeuvre (6) est une poignée de manoeuvre actionnable par un opérateur, poignée qui comprend un moyen de sécurité (16) par décharge de pression, que l'on doit actionner avant de manipuler la poignée, de façon à fournir en cours d'utilisation un avertissement sonore ou visuel indiquant une pression résiduelle à l'intérieur de la canalisation ou du réservoir.

5. Obturateur selon l'une quelconque des revendications précédentes, caractérisé en ce qu'il comprend un verrou de sécurité (18) qui limite le mouvement d'ouverture de l'obturateur pour empêcher la pression résiduelle de basculer l'obturateur en pleine ouverture.

6. Canalisation ou réservoir caractérisé en ce qu'il comprend un obturateur selon l'une quelconque des revendications précédentes.

**Patentansprüche**

1. Deckel zum Abdichten einer Öffnung in einer Rohrleitung oder einem Gefäß (2), aufweisend einen Schließteilkörper (1), eine Mehrzahl von Riegelteilen (5), die an dem Schließteilkörper (1) befestigt und zwischen Freigabe- und Eingriffslage bewegbar sind, einen Betätigungsteil (6), welcher durch Handbetätigung einer Bedienungsperson winkelmäßig bewegbar ist, eine Antriebseinrichtung (7), die durch Handbetätigung des Betätigungsteils (6) winkelmäßig bewegbar ist und eine Mehrzahl von Untereinrichtungen (14), von denen jeweils eine je einem Schließteil (5) zugeordnet ist und jeweils einen exzentrischen Antriebsverbindungsteil (8) aufweist, der an dem entsprechenden Riegelteil (5) gelagert ist, wodurch die Bewegung des Betätigungsteils (6) eine Bewegung der Antriebs- und der Untereinrichtungen (7, 14) bewirkt, so daß die Antriebsverbindung (8) die Schließteile (5) entweder in ihre Freigabe- oder ihre Eingriffslage bewegt, dadurch gekennzeichnet, daß die Antriebs- und Untereinrichtungen (7, 14) Antriebszapfen und angetriebene Zapfen sind und der Antriebszapfen (7) mit einem Zahnrad (10) kämmt, der an dem Schließteilkörper (1) winkelmäßig bewegbar befestigt ist, und daß das Zahnrad (10) mit den angetriebenen Zapfen (14) kämmt.

2. Deckel nach Anspruch 1, dadurch gekennzeichnet, daß der Schließteilkörper (1) in einer Ebene kreisförmig ausgebildet ist und wenigstens drei bogenförmige Riegelteile (5) vorgesehen sind, wobei der Antriebszapfen (7) außerhalb des Zentrums des Schließteilkörpers (7) montiert ist.

3. Deckel nach einem der Ansprüche 1 oder 2, dadurch gekennzeichnet, daß alle Riegelteile (5), bis auf einen, zwei angetriebene Zapfen (14) aufweisen, wobei dieser eine Riegelteil einen angetriebenen Zapfen (14) und den Antriebszapfen (7) umfaßt.

4. Deckel nach einem der vorangehenden Ansprüche, wobei der Betätigungsteil (6) ein durch die Bedienungsperson manipulierbarer Betätigungshandgriff ist und eine Sicherheits-Druckentlastung (16) aufweist, welche auszulösen ist, bevor der Handgriff betätigt werden kann, um dadurch bei Benutzung eine hörbare oder sichtbare Warnung über einen im Rohr oder im Behälter vorhandenen Restdruck zu geben.

5. Deckel nach einem der vorangehenden Ansprüche, gekennzeichnet durch einen Sicherheitsverriegelungsteil (18), welcher die Öffnungsbewegung des Deckels begrenzt, um das vollständige Aufklappen des Deckels durch den Restdruck zu verhindern.

6. Rohrleitung oder Behälter mit einem Deckel nach irgendeinem der vorangehenden Ansprüche.

FIG. 1.

# FIG. 2.

FIG. 3.

FIG. 4.

FIG. 5.

FIG. 6.

FIG. 7.

6

22

37

19

18

21

FIG. 8.

37

19

18

21